# EUROPÄISCHE PATENTSCHRIFT

(11) **EP 4 278 081 B1**
(45) Veröffentlichungstag und Bekanntmachung des Hinweises auf die Patenterteilung: **20.08.2025**
(21) Anmeldenummer: 21840609.8
(22) Anmeldetag: 20.12.2021
(51) Int. Cl.: F03B 13/06, F03B 17/02, F03G 3/00

(54) **HYDROMECHANISCHE ENERGIESPEICHER- UND ENERGIEUMWANDLUNGSVORRICHTUNG SOWIE BETRIEBSVERFAHREN**
HYDROMECHANICAL ENERGY STORAGE AND ENERGY CONVERSION DEVICE, AND OPERATING METHOD
DISPOSITIF DE STOCKAGE D'ÉNERGIE HYDROMÉCANIQUE ET DE CONVERSION D'ÉNERGIE, ET PROCÉDÉ DE FONCTIONNEMENT

(30) Priorität: 18.01.2021 DE 102021100873
(43) Veröffentlichungstag der Anmeldung: 22.11.2023
(73) Patentinhaber: BEBENROTH, Günther, 13051 Berlin (DE); FRANKE, Björn, 12249 Berlin (DE)
(72) Erfinder: BEBENROTH, Günther, 13051 Berlin (DE)
(74) Vertreter: PATERIS Patentanwälte PartmbB
(86) Internationale Anmeldenummer: PCT/EP2021/086727
(87) Internationale Veröffentlichungsnummer: WO 2022/152513

(56) Entgegenhaltungen:
- DE-A1- 102006 059 233
- US-A- 4 720 976
- US-A1- 2008 264 056
- US-A1- 2012 280 515

## Beschreibung

Die Erfindung betrifft eine hydromechanische Energiespeicher- und Energieumwandlungsvorrichtung.

In Hinblick auf die vermehrte Nutzung erneuerbarer Energien gewinnen Möglichkeiten zur Energiespeicherung zunehmend an Bedeutung.

Beispielsweise ist aus der WO 2020/ 018 329 A2 ein Energiespeichersystem bekannt, dass einen Kran und mehrere Blöcke umfasst, wobei der Kran Blöcke von einer niedrigeren Höhe zu einer höheren Höhe durch Stapeln der Blöcke bewegen kann. Dabei wird elektrische Energie als potentielle Energie der Blöcke gespeichert. Durch Bewegen der Blöcke von einer höheren Höhe auf eine niedrigere Höhe kann elektrische Energie basierend auf der kinetischen Energie der Blöcke beim Absenken erzeugt werden. Das Energiespeichersystem kann beispielsweise aus Sonnenenergie erzeugten Strom tagsüber als potentielle Energie in den gestapelten Blöcken speichern und die potentielle Energie in den gestapelten Blöcken während der Nachtstunden in Strom umwandeln und in das Stromnetz einspeisen.

Des Weiteren sind seit längerem Pumpspeicherkraftwerke bekannt, bei denen zur Energiespeicherung Wasser bergauf in ein Speicherbecken mittels elektrischer Energie gepumpt wird, wobei die potentielle Energie des Wassers erhöht wird. Zur Erzeugung von elektrischer Energie wird das gespeicherte Wasser genutzt, um nach Absolvieren eines Höhenunterschieds eine Turbine anzutreiben, die mit einem Generator verbunden ist.

Dieser Vorgang ist jedoch wenig effektiv, da z. B. zum Betrieb einer 200 MW Turbine ein Wasserdurchfluss von 11.000 I pro Sekunde benötigt wird.

Zudem können Pumpspeicherkraftwerke nur in Gegenden betrieben werden, deren Geländeprofil einen ausreichenden Höhenunterschied sowie Platz für die Speicherbecken bieten und in denen entsprechende Wassermengen verfügbar sind. Darüber hinaus stellen Pumpspeicherkraftwerken einen erheblichen Eingriff in die Ökologie und ins Landschaftsbild des gewählten Standorts dar.

Neben der Energiespeicherung besteht trotz inzwischen etablierter Technologien wie Windenergiegewinnung und Solarstromerzeugung weiterhin Bedarf an Technologien zur umweltverträglichen und nachhaltigen Stromerzeugung, die insbesondere eine möglichst zuverlässige und gleichmäßige Energiegewinnung ermöglichen. Eine weitere bekannte Technologie sind Gezeitenkraftwerke, bei denen potentielle und kinetische Energie aus dem Tidenhub des Meeres in elektrische Energie umgewandelt wird, indem das durch Ebbe und Flut in Strömung versetzte Meereswasser Turbinen antreibt. Im Zeitraum des Wechsels zwischen Ebbe und Flut herrscht jedoch keine oder nur eine geringfügige Strömung, so dass die Erzeugung der elektrischen Energie mit starken Schwankungen verbunden ist. Zudem ist die Korrosion der Metallbauteile aufgrund des Salzwassers problematisch.

Aus der nachveröffentlichten Patentanmeldung DE 10 2019 008 393 A1 ist ein Energiespeichersystem bekannt, bei dem ein Auftriebskörper in einem wassergefüllten Behälter zwischen einer unteren Position und einer oberen Position bewegbar ist, wobei der Wasserstand in dem wassergefüllten Behälter unverändert bleibt. Die obere Position wird durch entsprechenden Auftrieb des Auftriebskörpers eingenommen, während die untere Position erreicht wird, indem der Auftriebskörper mittels Zugseilen nach unten gezogen wird. Durch Fixierung des Auftriebskörpers in der unteren Position kann Energie gespeichert werden. Hierbei ist jedoch zwingend zunächst elektrische Energie nötig, um die Zugseile zu spannen und den Auftriebskörper in die untere Position bewegen zu können.

Des Weiteren ist aus der US 4 207 741 A eine Energiespeichereinrichtung bekannt, bei der ein Kolben in einem Wassertank auf- und abwärts bewegt wird und dabei ein Hydraulikfluid unter Druck setzt.

Die WO 2011/ 072 280 A2 offenbart eine Energieerzeugungseinrichtung mit einem Tank zur Aufnahme einer Flüssigkeit sowie einem Einlass und einem Auslass zum Füllen bzw. Entleeren des Tanks. Zudem ist ein Container vorgesehen, der sich vertikal in dem Tank zwischen einer unteren und einer oberen Position bewegt. Mit dem Container ist eine Energieübertragungseinrichtung gekoppelt, um Energie aus der Containerbewegung übertragen zu können. Der Container kann zudem ebenfalls mit Flüssigkeit gefüllt werden.

Aus der US 2012/280515 A1 ist ein Energiespeichersystem bekannt, das so konfiguriert ist, dass es Energie für die anschließende Entladung speichert. Eine Ausführungsform umfasst eine indirekte Energiespeicherbaugruppe, die so konfiguriert ist, dass sie eine Energiezufuhr von einer direkten Speicherbaugruppe akzeptiert. Die indirekte Energiespeicherbaugruppe umfasst einen Wandler zum Anheben einer Masse, einen mit dem Wandler gekoppelten Drehzahlminderer zur Erhöhung des bereitgestellten Drehmoments und eine mit dem Drehzahlminderer gekoppelte Masse zum Erzeugen potenzieller Energie beim Anheben. In einer Ausführungsform erzeugt die direkte Energiespeicherbaugruppe Energie auf der Grundlage des Absinkens einer Masse, wobei das Absinken durch den Betrieb eines mit einem Generator gekoppelten Geschwindigkeitserhöhers gesteuert wird. Die Masse der direkten Energiespeicherbaugruppe kann einen Schwimmer zum Anheben der Masse als Reaktion auf den Wasserstand umfassen.

Vor diesem Hintergrund ist es Aufgabe der vorliegenden Erfindung, eine Energiespeichervorrichtung sowie ein zugehöriges Betriebsverfahren anzugeben, die eine effektive, umweltverträgliche und zuverlässige Energiespeicherung ermöglichen. Wünschenswert wäre zudem eine Energieumwandlungsvorrichtung und ein entsprechendes Betriebsverfahren, mit denen umweltverträglich und nachhaltig sowie zuverlässig und gleichmäßig elektrische Energie generiert werden kann.

Gelöst wird diese Aufgabe durch die Gegenstände der unabhängigen Ansprüche. Die abhängigen Ansprüche betreffen Weiterbildungen der erfindungsgemäßen Lösungen.

Eine erfindungsgemäße hydromechanische Energiespeicher- und Energieumwandlungsvorrichtung, im Folgenden als die Vorrichtung bezeichnet, weist auf: ein Wasserreservoir, einen in dem Wasserreservoir angeordneten erster Auftriebskörper, der mit steigendem Wasserstand in dem Wasserreservoir von einer unteren Position in eine oberen Position anhebbar und in der oberen Position fixierbar ist, einen ersten Generator zur Umwandlung von kinetischer Energie in elektrische Energie und eine den ersten Auftriebskörper mit dem ersten Generator verbindende erste Energieübertragungseinrichtung, ausgebildet zur Übertragung von kinetischer Energie zwischen dem ersten Auftriebskörper und dem ersten Generator.

Das Wasserreservoir kann als natürliches Wasservorkommen, z. B. Meer oder See, ausgebildet sein. Alternativ kann das Wasserreservoir ein künstlich geschaffenes Behältnis sein. Hierbei besteht die Möglichkeit bereits vorhandene Wasserreservoire, z. B. Schwimmbecken, Absetzbecken etc. zu nutzen, so dass diese einer Weiterverwendung zugeführt werden können und die Vorrichtung ressourcenschonend gebaut werden kann.

Die Vorrichtung kann sowohl mit Salz- als auch mit Süßwasser betrieben werden, wobei ein Süßwasserbetrieb in Hinblick auf eine verringerte Korrosion vorteilhaft ist.

Der Auftriebskörper ist schwimmfähig und kann beispielsweise als Betonbecken, ein (altes) Schiff, Container etc. ausgebildet sein. Bevorzugt können bereits vorhandene Gegenstände als Auftriebskörper genutzt werden, so dass diese einer Weiterverwendung zugeführt werden können und die Vorrichtung ressourcenschonend gebaut werden kann.

Der Generator kann unterschiedliche Bauformen aufweisen, solange er in der Lage ist kinetische Energie in elektrische Energie im gewählten Energiebereich umzuwandeln.

Die Energieübertragungseinrichtung dient der Übertragung von kinetischer Energie vom ersten Auftriebskörper zum Generator. Sie kann beispielsweise Zahnstangen, Seilzüge, Ketten, Zahnräder, Umlenkrollen, Getriebe etc. aufweisen.

Mittels der Vorrichtung kann Energie in Form von potentieller Energie gespeichert werden, indem der Wasserstand in dem Wasserreservoir erhöht wird. Dies kann beispielsweise aufgrund natürlicher Vorgänge, wie z. B. Flut, Wellen etc., oder durch Einleiten von weiterem Wasser in das Wasserreservoir, z. B. mittels Pumpen, erfolgen.

Durch die Erhöhung des Wasserstands wird der erste Auftriebskörper von einer unteren Position in eine obere Position angehoben. Dabei erhöht sich die potentielle Energie des ersten Auftriebskörpers. Mit anderen Worten wird die Änderung des Wasserstands als Triebkraft für das Anheben des ersten Auftriebskörpers von der unteren Position in die obere Position genutzt. Der erste Auftriebskörper befindet sich dabei zumindest teilweise stets oberhalb des Wasserstands, d. h. der erste Auftriebskörper schwimmt auf der Wasseroberfläche.

Durch Fixierung des ersten Auftriebskörpers in der oberen Position kann die potentielle Energie des ersten Auftriebskörpers gespeichert werden. Die Fixierung erfolgt mittels einer Fixiereinrichtung, die die obere Position des Auftriebskörpers unabhängig vom Wasserstand fixiert.

Optional kann eine Fixierung in mehreren Positionen oberhalb der oberen Position ermöglicht sein. Die Fixiereinrichtung bewirkt bei Fixierung des ersten Auftriebskörpers derart, dass dieser in der oberen Position verbleibt, auch wenn der Wasserstand in dem Wasserreservoir sinkt.

Die Fixiereinrichtung kann beispielsweise in Form eines Fixierbolzens ausgebildet sein. Sie kann an einer Wandung des Wasserreservoirs befestigt sein, so dass bei Fixierbedarf eine feste, jedoch lösbare Verbindung zwischen dem ersten Auftriebskörper und der Wandung des Wasserreservoirs herstellbar ist. Alternativ kann die Fixiereinrichtung auch mit der ersten Energieübertragungseinrichtung zusammenwirken und den ersten Auftriebskörper indirekt fixieren, indem eine Bewegung der fest mit dem ersten Auftriebskörper verbundenen ersten Fixiereinrichtung, also eine Übertragung von kinetischer Energie zwischen dem ersten Auftriebskörper und dem ersten Generator verhindert wird.

Die Fixiereinrichtung bietet eine einfache und zuverlässige Möglichkeit, den ersten Auftriebskörper in der oberen Position zu fixieren und dadurch die mit der oberen Position verbundene potentielle Energie zu speichern. Dadurch kann trotz sinkendem Wasserstand der erste Auftriebskörper in der oberen Position gehalten werden, so dass die im ersten Auftriebskörper gespeicherte potentielle Energie erst bei Bedarf und unabhängig von einem Sinken des Wasserstands in kinetische Energie umgewandelt werden kann.

Zum Entladen der gespeicherten Energie, d. h. zur Umwandlung der gespeicherten potentiellen Energie in elektrische Energie, wird der erste Auftriebskörper von der oberen Position abgesenkt, beispielsweise wieder zurück in die untere Position bewegt. Hierbei wird die potentielle Energie zunächst in kinetische Energie und anschließend die kinetische Energie mittels des ersten Generators in elektrische Energie umgewandelt. Die Übertragung der kinetischen Energie vom ersten Auftriebskörper zum ersten Generator erfolgt dabei mittels der ersten Energieübertragungseinrichtung.

Die generierte elektrische Energie kann direkt zum Betrieb elektrischer Anlagen genutzt werden. Mit anderen Worten kann die Vorrichtung eine Speicherung und Erzeugung von elektrischer Energie direkt am Standort der Vorrichtung und somit unabhängig von vorhandenen elektrischen Stromnetzen ermöglichen.

Alternativ oder zusätzlich kann die generierte elektrische Energie in ein elektrisches Stromnetz eingespeist werden. Die Einspeisung in ein elektrisches Stromnetz ermöglicht vorteilhaft eine örtliche Trennung von Speicher- sowie Erzeugungsort einerseits und Verbrauchsort andererseits.

Neben der Umwandlung von potentieller Energie in kinetische Energie und anschließend in elektrische Energie beim Absenken des ersten Auftriebskörpers von der oberen Position kann ebenso ein Teil der kinetischen Energie des ersten Auftriebskörpers beim Anheben von der unteren in die obere Position in elektrische Energie mittels des ersten Generators umgewandelt werden. Mit anderen Worten kann elektrische Energie sowohl beim Anheben als auch beim Absenken des Auftriebskörpers gewonnen werden.

Die Vorrichtung ermöglicht vorteilhaft eine effektive, umweltverträgliche und zuverlässige Energiespeicherung, da Abhängigkeiten von natürlichen Vorgängen wie Wind, Sonne etc. nicht zwingend vorhanden sind sowie Energieumwandlung.

Gemäß weiteren Ausführungsvarianten kann das Wasserreservoir ein natürliches Wasservorkommen, beispielsweise ein Meer oder See sein.

Die Nutzung eines natürlichen Wasservorkommens vereinfacht den Bau der Vorrichtung. Zudem können natürliche Vorgänge, wie z. B. Ebbe und Flut oder Wellen zur Veränderung des Wasserstands genutzt werden. Zudem wird die Speicherung und Umwandlung von in dem natürlichen Wasservorkommen enthaltener Energie ermöglicht, so dass elektrische Energie nachhaltig und umweltverträglich generiert werden kann.

Alternativ kann das Wasserreservoir als ein erstes Behältnis mit einer verschließbaren Öffnung zur Zufuhr und Abfuhr von Wasser zu bzw. aus dem ersten Behältnis ausgebildet sein. Die Öffnung kann bevorzugt an einem unteren Ende des ersten Behältnisses angeordnet sein, so dass beispielsweise ein vollständiges Entleeren des ersten Behältnisses ermöglicht ist.

Bevorzugt handelt es sich bei dem ersten Behältnis um ein künstlich geschaffenes Behältnis, vorzugsweise um ein bereits vorhandenes erstes Behältnis. Dies ermöglicht eine Errichtung der Vorrichtung unabhängig vom Vorhandensein eines natürlichen Wasserreservoirs, so dass die Vorrichtung an beliebigen Standorten errichtet und betrieben werden kann.

Die Öffnung des ersten Behältnisses ist verschließbar ausgeführt, z. B. mittels Klappen, so dass ein Absinken des Wasserstands im ersten Behältnis durch Schließen der Öffnung verhindert werden kann. Zum Erhöhen des Wasserstands im ersten Behältnis wird die Öffnung geöffnet, so dass dem ersten Behältnis Wasser zugeführt werden kann.

Optional kann die Öffnung mit einem natürlichen Wasservorkommen in wasserleitender Verbindung stehen, z. B. über Rohrleitungen. Dies ermöglicht den Wasseraustausch zwischen dem ersten Behältnis und dem natürlichen Wasserreservoir.

Beispielsweise kann das erste Behältnis im Meer oder einem See angeordnet sein. Dies ermöglicht die Nutzung von Ebbe und Flut und/oder Wellen zur Zufuhr und/oder Abfuhr von Wasser aus dem ersten Behältnis und somit eine Variation des Wasserstands im ersten Behältnis, die gemäß obiger Erläuterung zur Energiespeicherung und Energieumwandlung genutzt werden kann.

Optional kann die Vorrichtung einen Wasservorratsbehälter aufweisen, wobei die Öffnung des ersten Behältnisses mit dem Wasservorratsbehälter in wasserleitender Verbindung steht, z. B. über Rohrleitungen.

Bevorzugt kann es sich bei dem Wasservorratsbehälter um einen künstlich geschaffenen Behälter handeln, vorzugsweise um einen bereits vorhandenen Behälter, z. B. ein z. B. Schwimmbecken, Absetzbecken etc., so dass diese einer Weiterverwendung zugeführt werden können und die Vorrichtung ressourcenschonend gebaut werden kann. Weiter bevorzugt kann der Wasservorratsbehälter unterhalb des Wasserreservoirs angeordnet sein, so dass Wasser aus dem Wasserreservoir lediglich aufgrund der Schwerkraft teilweise oder vollständig in den Wasservorratsbehälter ablaufen kann.

Steht die Öffnung des ersten Behältnisses mit einem natürlichen Wasservorkommen und/oder einem Wasservorratsbehälter in wasserleitender Verbindung, so kann die Vorrichtung eine Pumpeinrichtung zur Zufuhr von Wasser aus dem natürlichen Wasservorkommen und/oder aus dem Wasservorratsbehälter zum Wasserreservoir aufweisen.

Die Pumpeinrichtung ermöglicht eine einfache, effektive und zuverlässige Möglichkeit zur Variation des Wasserstands im ersten Behältnis.

Gemäß weiteren Ausführungsvarianten kann die Vorrichtung neben dem ersten Behältnis ein zweites Behältnis mit einer verschließbaren Öffnung zur Zufuhr und Abfuhr von Wasser zu bzw. aus dem zweiten Behältnis, einen in dem zweiten Behältnis angeordneten zweiten Auftriebskörper, der mit steigendem Wasserstand in dem zweiten Behältnis von einer unteren Position in eine oberen Position anhebbar und in der oberen Position fixierbarer ist, einen zweiten Generator zur Umwandlung von kinetischer Energie in elektrische Energie und eine den zweiten Auftriebskörper mit dem zweiten Generator verbindende zweite Energieübertragungseinrichtung, ausgebildet zur Übertragung von kinetischer Energie zwischen dem zweiten Auftriebskörper und dem zweiten Generator. Das zweite Behältnis ist mit dem ersten Behältnis und/oder entweder dem Wasservorratsbehälter oder dem natürlichen Wasservorkommen wasserleitend verbunden, z. B. mittels Rohrleitungen.

Das erste Behältnis mit dem ersten Auftriebskörper und das zweite Behältnis mit dem zweiten Auftriebskörper können identisch aufgebaut sein, so dass Aufwand und Kosten für die Errichtung der Vorrichtung verringert sein können.

Zur genaueren Beschreibung des zweiten Behältnisses, des zweiten Generators und der zweiten Energieübertragungseinrichtung wird auf die obigen Ausführung bezüglich des ersten Behältnisses, des ersten Generators und der ersten Energieübertragungseinrichtung verwiesen, die entsprechend übertragbar sind.

Das zweite Behältnis kann beispielsweise unterhalb des ersten Behältnisses angeordnet sein. "Unterhalb" bezieht sich dabei auf die Höhenlage im Erdgravitationsfeld, d. h. also eine Lage näher am Erdmittelpunkt. Der Höhenunterschied zwischen dem ersten Behältnis und dem zweiten Behältnis kann beispielsweise zwischen 1 und 2 m, gemessen zwischen den tiefsten Punkten innerhalb der Behältnisse, betragen.

Optional können weitere Behältnisse, Auftriebskörper, Generatoren und Energieübertragungseinrichtungen vorhanden sein, die jeweils untereinander und/oder entweder dem Wasservorratsbehälter oder dem natürlichen Wasservorkommen wasserleitend verbunden sind. Dadurch kann die Energiespeicherkapazität erhöht und eine besonders gleichmäßige Erzeugung von elektrischer Energie gewährleistet werden.

Gemäß weiteren Ausführungsvarianten können der erste und/oder der zweite Auftriebskörper als mit Wasser befüllbare Hohlkörper ausgebildet sein.

Die Bauweise der Hohlköper kann dabei nach oben offen oder geschlossen sein. Durch eine Befüllung der Auftriebskörper bei deren Positionierung in der oberen Position kann die Masse der Auftriebskörper und damit die gespeicherte potentielle Energie erhöht werden, so dass beim Absenken zur unteren Position mehr kinetische Energie in elektrische Energie umgewandelt werden kann.

Hierfür kann die Vorrichtung einen oberhalb des ersten und/oder zweiten Behältnisses angeordneten Wasserbehälter aufweisen, wobei der Wasserbehälter wasserleitend, z. B. mittels Rohrleitungen, mit dem ersten und/oder dem zweiten Auftriebskörper verbindbar ist, insbesondere bei einer Positionierung der Auftriebskörper in der jeweils oberen Position.

"Oberhalb" bezieht sich wiederum auf die Höhenlage im Erdgravitationsfeld, d. h. also eine Lage weiter entfernt vom Erdmittelpunkt. Bevorzugt kann es sich bei dem Wasserbehälter um einen künstlich geschaffenen Behälter handeln, vorzugsweise um einen bereits vorhandenen Behälter, z. B. ein z. B. Schwimmbecken, Absetzbecken etc., so dass diese einer Weiterverwendung zugeführt werden können und die Vorrichtung ressourcenschonend gebaut werden kann.

Der Wasserbehälter kann beispielsweise mittels einer weiteren Pumpvorrichtung befüllbar ausgebildet sein. Hierfür wird zwar Energie benötigt, allerdings kann die Befüllung des Wasserbehälters in Zeiten von Energieüberschuss im elektrischen Stromnetz erfolgen, so dass sonst überschüssiger elektrischer Strom zumindest teilweise in Form von potentieller Energie des in den Wasserbehälter gepumpten Wassers gespeichert werden kann.

Alternativ oder zusätzlich ist ein natürlicher Wasserzufluss, z. B. durch einen Fluss oder Bach, zum Wasserbehälter möglich.

Gemäß weiteren Ausführungsvarianten können die erste Energieübertragungseinrichtung zur direkten Übertragung von kinetischer Energie zwischen dem ersten Auftriebskörper und dem ersten Generator und/oder die zweite Energieübertragungseinrichtung zur direkten Übertragung von kinetischer Energie zwischen dem zweiten Auftriebskörper und dem zweiten Generator ausgebildet sein.

Mit anderen Worten kann die erste Energieübertragungseinrichtung den ersten Auftriebskörper direkt mit dem ersten Generator verbinden und/oder die zweite Energieübertragungseinrichtung kann den zweiten Auftriebskörper direkt mit dem zweiten Generator verbinden. Die Übertragung von kinetischer Energie vom ersten Auftriebskörper zum ersten Generator und/oder vom zweiten Auftriebskörper zum zweiten Generator kann also direkt erfolgen, d. h. ohne zwischenzeitliche Umwandlung in andere Energieformen wie beispielsweise Druckenergie, also potentielle Energie eines unter Druck stehenden Behälters. Dadurch können Energieverluste verringert werden und weitere Energieumwandlungseinrichtungen zur Umwandlung von Druckenergie in kinetische Energie sind entbehrlich. Zudem sind auch keine druckgeständigen Leitungen und Behältnisse erforderlich.

Ein weiterer Aspekt der Erfindung betrifft ein Betriebsverfahren für eine Energiespeicher- und Energieumwandlungsvorrichtung gemäß vorstehender Beschreibung. Das Verfahren weist auf: Bewegen des ersten Auftriebskörpers von der unteren Position in die obere Position und von der oberen Position in die untere Position mittels Ändern des Wasserstands in dem Wasserreservoir, Übertragen von kinetischer Energie von dem ersten Auftriebskörper zu dem ersten Generator während des Bewegens des ersten Auftriebskörpers von der unteren Position in die obere Position und von der oberen Position in die untere Position, und Umwandeln der übertragenen kinetischen Energie in elektrische Energie.

Mit dem Betriebsverfahren sind die Vorteile der Energiespeicher- und Energieumwandlungsvorrichtung entsprechend verbunden. Die Beschreibung der Energiespeicher- und Energieumwandlungsvorrichtung dient gleichzeitig der Erläuterung des Betriebsverfahrens.

Optional kann das Verfahren ein Fixieren des ersten Auftriebskörpers in der oberen Position aufweisen. Weitere Verfahrensmerkmale ergeben sich aus der Funktionsbeschreibung der Energiespeicher- und Energieumwandlungsvorrichtung.

Im Folgenden wird die Erfindung beispielhaft unter Bezugnahme auf die anliegenden Figuren anhand bevorzugter Ausführungsformen erläutert, wobei die nachfolgend dargestellten Merkmale sowohl jeweils für sich genommen als auch in verschiedenen Kombinationen miteinander einen Aspekt der Erfindung darstellen können. Es zeigen:
- Fig. 1: ein Beispiel einer hydromechanischen Energiespeicher- und Energieumwandlungsvorrichtung in einer perspektivische Darstellung;
- Fig. 2: ein Beispiel einer hydromechanischen Energiespeicher- und Energieumwandlungsvorrichtung in einer Schnittdarstellung;
- Fig. 3: ein Beispiel einer hydromechanischen Energiespeicher- und Energieumwandlungsvorrichtung in einer Schnittdarstellung;
- Fig. 4: ein Ausführungsbeispiel einer erfindungsgemäßen hydromechanischen Energiespeicher- und Energieumwandlungsvorrichtung in einer Schnittdarstellung;
- Fig. 5: ein Beispiel einer hydromechanischen Energiespeicher- und Energieumwandlungsvorrichtung in einer Schnittdarstellung; und
- Fig. 6: ein Ablaufschema eines beispielhaften Betriebsverfahrens.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Eine Ausnahme hiervon bildet die Richtungsterminologie "unterhalb" und "oberhalb", die sich auf die Höhenlage im Erdgravitationsfeld, also näherungsweise die Entfernung vom Erdmittelpunkt bezieht. Diesbezüglich ist eine Anordnung "oberhalb" bei gleicher Masse mit einer höheren potentiellen Energie verbunden als eine Anordnung "unterhalb."

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung wird der Begriff "verbunden", sowohl zum Beschreiben einer direkten als auch einer indirekten Verbindung verwendet. In den Figuren werden identische oder ähnliche Elemente mit identischen Bezugszeichen versehen, soweit dies zweckmäßig ist.

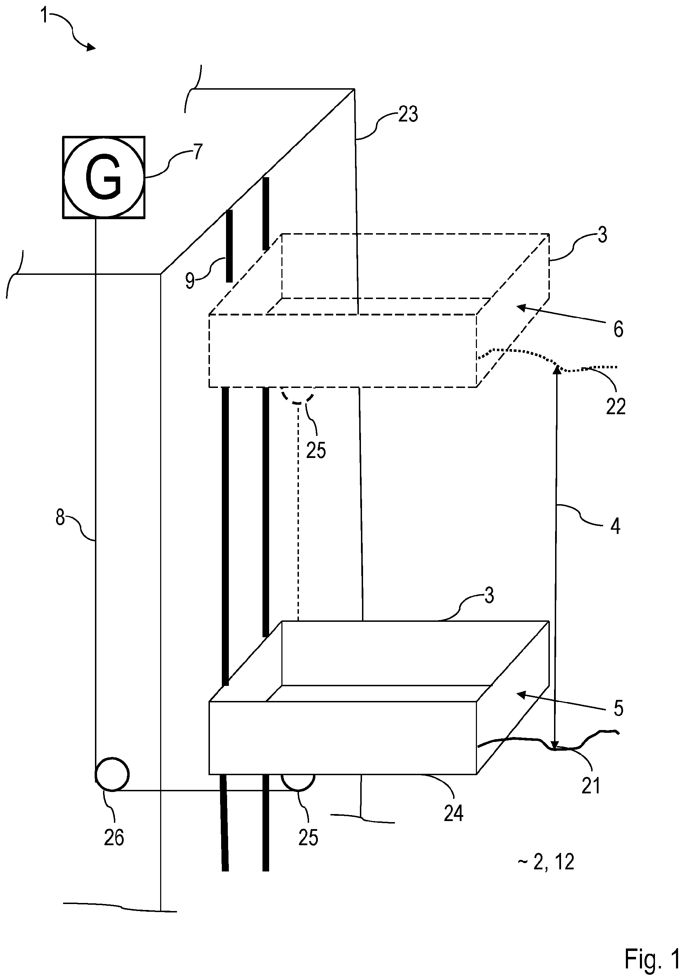

In Figur 1 ist ein nicht der Erfindung entsprechendes Beispiel einer hydromechanischen Energiespeicher- und Energieumwandlungsvorrichtung 1 skizzenhaft dargestellt. Die Vorrichtung 1 nutzt ein Wasserreservoir 2, bei dem es sich um ein natürliches Wasservorkommen 12, vorzugsweise ein Meer mit starken Tidenhub, handelt. In dem Wasserreservoir 2 befindet sich Wasser. Der Wasserstand 4 im Wasserreservoir schwankt zwischen einem unteren Wasserstand 21 und einem oberen Wasserstand 22 aufgrund des Tidenhubs, d. h. der untere Wasserstand 21 entspricht dem Wasserstand 4 bei Ebbe und der obere Wasserstand 22 entspricht dem Wasserstand 4 bei Flut. Alternativ oder zusätzlich kann der Wasserstand 4 auch aufgrund von Wasserwellen variieren.

Das Wasserreservoir 2 wird durch eine Mauer 23 mindestens einseitig begrenzt. Die Mauer 23 kann beispielsweise als Hafenmauer ausgebildet sein.

In dem Wasserreservoir 2 ist ein erster Auftriebskörper 3 angeordnet, bei dem es sich im Beispiel um einen hohlen Betonkörper handelt. Der erste Auftriebskörper 3 ist schwimmfähig ausgebildet, so dass seine unterste Begrenzungsfläche 24 im schwimmenden Zustand ungefähr der Höhe des unteren Wasserstands 21 entspricht. In Figur 1 ist der erste Auftriebskörper 3 in der unteren Position 5 mit durchgezogenen Linien dargestellt. Mit steigendem Wasserstand 4 wird der erste Auftriebskörper von der unteren Position 5 in die obere Position 6 angehoben. In Figur 1 ist der erste Auftriebskörper 3 in der oberen Position 6 mit gestrichelten Linien dargestellt.

An der Mauer 23 ist eine Fixiereinrichtung 9 angeordnet, die im Beispiel als Schienensystem ausgebildet ist, entlang dessen sich der erste Auftriebskörper 3 zwischen der unteren Position 5 und der oberen Position 6 bewegen kann. Mittels Fixierelementen (nicht dargestellt), die z. B. als Bremsschuhe oder als am ersten Auftriebskörper 3 befestigte hakenförmige Eingriffeinrichtungen, die mit entsprechenden Eingriffösen der Fixiereinrichtung 9 zusammenwirken, ausgebildet sein können, kann der erste Auftriebskörper in der oberen Position 6 fixiert werden, so dass ein Absinken des ersten Auftriebskörpers 3 bei wieder sinkendem Wasserstand 4 vermieden wird.

Die Vorrichtung 1 weist weiterhin einen ersten Generator 7 zur Umwandlung von kinetischer Energie in elektrische Energie auf, der mittels der ersten Energieübertragungseinrichtung 8 mit dem ersten Auftriebskörper 3 verbunden ist. Im Ausführungsbeispiel ist die erste Energieübertragungseinrichtung 8 als Seilzug ausgebildet, der über eine Seilrolle 25 und eine Umlenkrolle 26 geführt wird.

Zur Energiespeicherung wird der erste Auftriebskörper 3 bei Zunahme des Wasserstands 4 im Wasserreservoir 2 von der unteren Position 5 in die obere Position 6 bewegt, wobei kinetische Energie in potentielle Energie umgewandelt wird. Durch Fixierung des ersten Auftriebskörpers 3 in der oberen Position 6 mittels der Fixiereinrichtung 9 kann Energie in Form potentieller Energie des ersten Auftriebskörpers in der oberen Position 6 gespeichert werden.

Zum Entladen der gespeicherten potentiellen Energie wird der erste Auftriebskörper 3 wieder in die untere Position 5 abgesenkt. Der in kinetische Energie umgewandelte Teil der potentiellen Energie des ersten Auftriebskörpers 3 in der oberen Position 6 wird dabei mittels der Energieübertragungseinrichtung 8 an den Generator 7 übertragen, der diese kinetische Energie in elektrische Energie umwandelt und beispielsweise in ein elektrisches Stromnetz (nicht dargestellt) einspeist.

Entsprechend kann auch bereits beim Anheben des ersten Auftriebskörpers 3 von der unteren Position 5 in die obere Position 6 kinetische Energie mittels der Energieübertragungseinrichtung 8 an den Generator 7 übertragen und von diesem in elektrische Energie umwandelt werden.

Im Ergebnis kann mit der Schwankung des Wasserstands 4 zwischen dem unteren Wasserstand 21 und dem oberen Wasserstand 22 in Zusammenhang stehende Energie in elektrische Energie umgewandelt werden. Hat die Schwankung des Wasserstands 4 eine natürliche Ursache, kann elektrische Energie umweltverträglich und nachhaltig gewonnen werden. Durch die Fixierung des ersten Auftriebskörpers 3 in der oberen Position 6 besteht die Möglichkeit der Energiespeicherung, so dass die Generierung von elektrischer Energie bedarfsgerecht erfolgen kann.

Durch Anordnung mehrerer Auftriebskörper, Fixiereinrichtungen, Generatoren etc. und entsprechende Steuerung der Energiespeicher- und Energieumwandlungsvorgänge kann elektrische Energie gleichmäßig und zuverlässig bereitgestellt werden.

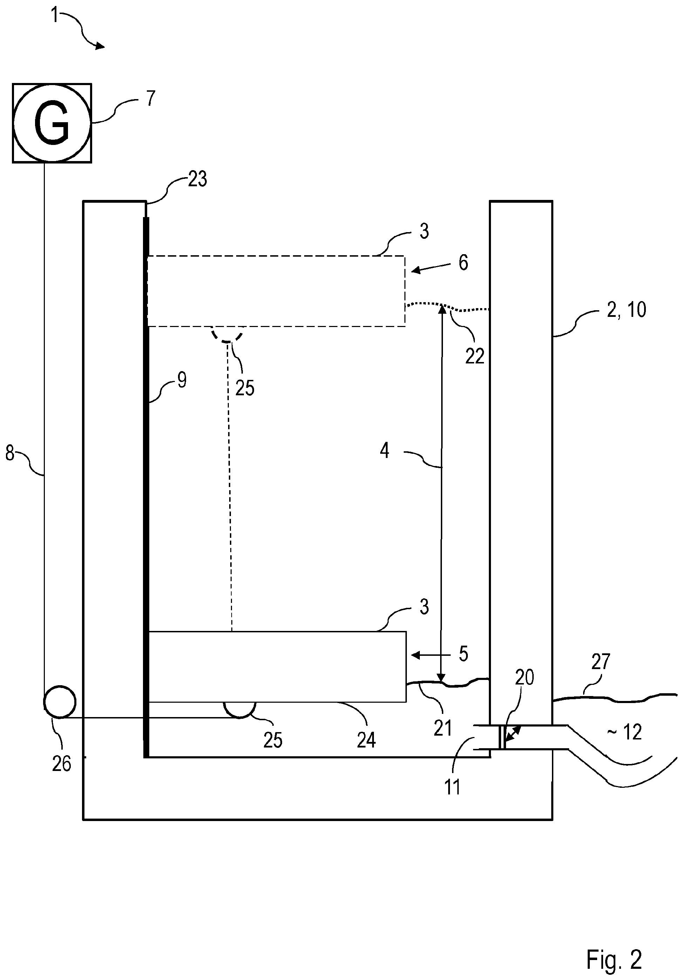

Figur 2 zeigt ein weiteres, nicht zur Erfindung gehörendes Beispiel einer hydromechanischen Energiespeicher- und Energieumwandlungsvorrichtung 1. Im Unterschied zur hydromechanischen Energiespeicher- und Energieumwandlungsvorrichtung 1 des Beispiels gemäß Figur 1 ist das Wasserreservoir 2 nicht als natürliches Wasservorkommen 12, sondern als ein erstes Behältnis 10 ausgebildet. Das erste Behältnis 10 ist ein künstlich geschaffenes Behältnis 10 und weist eine Öffnung 11 zur Zufuhr und Abfuhr von Wasser zu bzw. aus dem ersten Behältnis 10 auf, wodurch der Wasserstand 4 im ersten Behältnis 10 variiert werden kann. Selbstverständlich können auch mehrere Öffnungen 11 vorhanden sein, wodurch die Steuerung des Wasserstands 4 vereinfacht sein kann. Die Öffnung 11 ist mittels einer Verschlusseinrichtung 20 verschließbar, die beispielsweise wie in Figur 2 gezeigt als verschlussklappe ausgebildet sein kann.

Die Öffnung 11 steht mit einem natürlichen Wasservorkommen 12, z. B. einem Meer oder See, in wasserleitender Verbindung. Variiert der Wasserstand 27 des natürlichen Wasservorkommens 12, z. B. aufgrund von Ebbe und Flut und/oder Wellen, so kann entsprechend Wasser zum ersten Behältnis zugeführt bzw. abgeführt werden. Zur prinzipiellen Funktionsweise wird auf die Ausführungen zu Figur 1 verwiesen.

Optional kann bei diesem Beispiel 9 jedoch die Fixiereinrichtung 9 entfallen, da eine Fixierung des ersten Auftriebskörpers 3 in der oberen Position 6, auch über Wasserstand 4 möglich ist, indem der obere Wasserstand 22 durch Schließen der Öffnung 11 konstant gehalten wird.

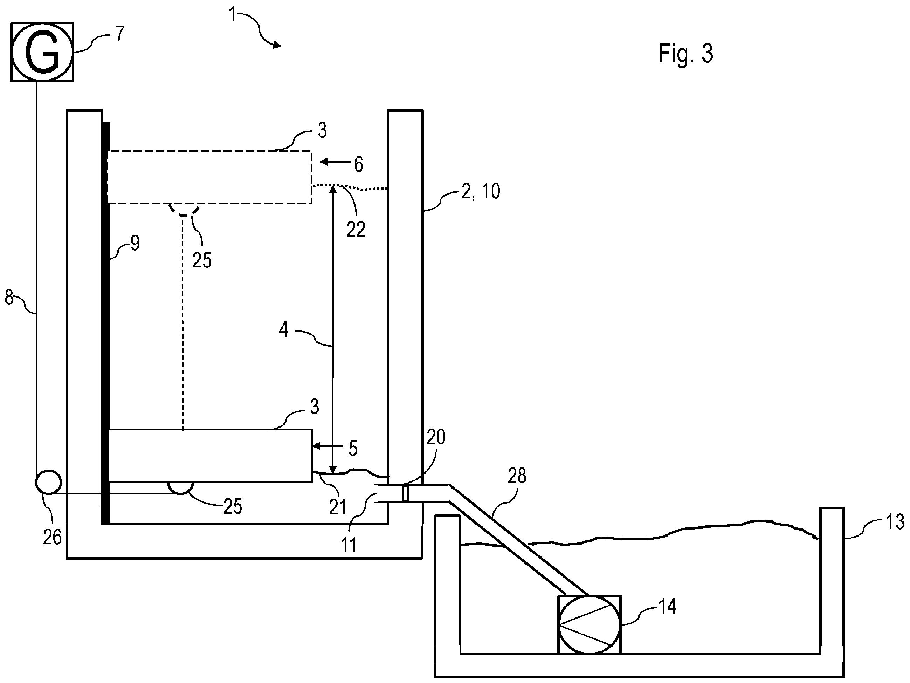

Figur 3 zeigt ein weiteres, nicht zur Erfindung gehörendes Beispiel einer hydromechanischen Energiespeicher- und Energieumwandlungsvorrichtung 1. Im Unterschied zur hydromechanischen Energiespeicher- und Energieumwandlungsvorrichtung 1 des Beispiels gemäß Figur 2 steht die Öffnung 11 des Wasserreservoirs 2 nicht mit einem natürlichen Wasservorkommen 12 in wasserleitender Verbindung, sondern stattdessen mit einem Wasservorratsbehälter 13. Hierfür wird die Rohrleitung 28 genutzt. Im Übrigen wird auf die Ausführungen zu Figur 2 verwiesen.

Bei dem Wasservorratsbehälter 13 handelt es sich um ein künstlich geschaffenes Behältnis. Dadurch ist die Vorrichtung 1 unabhängig von natürlichen Wasservorkommen 12 errichtbar und betreibbar. Insbesondere können bereits vorhandene Einrichtungen, z. B. Wasserbehälter, Generatoren etc., beispielsweise in stillgelegten Kraftwerken, genutzt werden, so dass mit der Errichtung der Vorrichtung 1 keine oder allenfalls geringfügige Umweltschäden verbunden sind. Die Vorrichtung 1 kann beispielsweise im Wesentlichen ebenerdig verbaut werden, so dass auch eine kostengünstige Errichtung möglich ist.

In dem Wasservorratsbehälter 13 ist eine Pumpeinrichtung 13 angeordnet, mit der Wasser aus dem Wasservorratsbehälter 13 in das erste Behältnis 10 gepumpt werden kann. Die Pumpeinrichtung 14 ist mit elektrischem Strom betreibbar. Beispielsweise kann im elektrischen Stromnetz vorhandene überschüssige Energie genutzt werden, um Wasser vom Wasservorratsbehälter 13 in das erste Behältnis 10 pumpen zu können. Mit anderen Worten kann die Vorrichtung 1 als Pufferspeicher für überschüssige elektrische Energie im elektrischen Stromnetz genutzt werden, die beispielsweise bei hoher Sonneneinstrahlung oder vorherrschendem Wind mit Solarenergieanlagen bzw. Windkraftanlagen erzeugt wird.

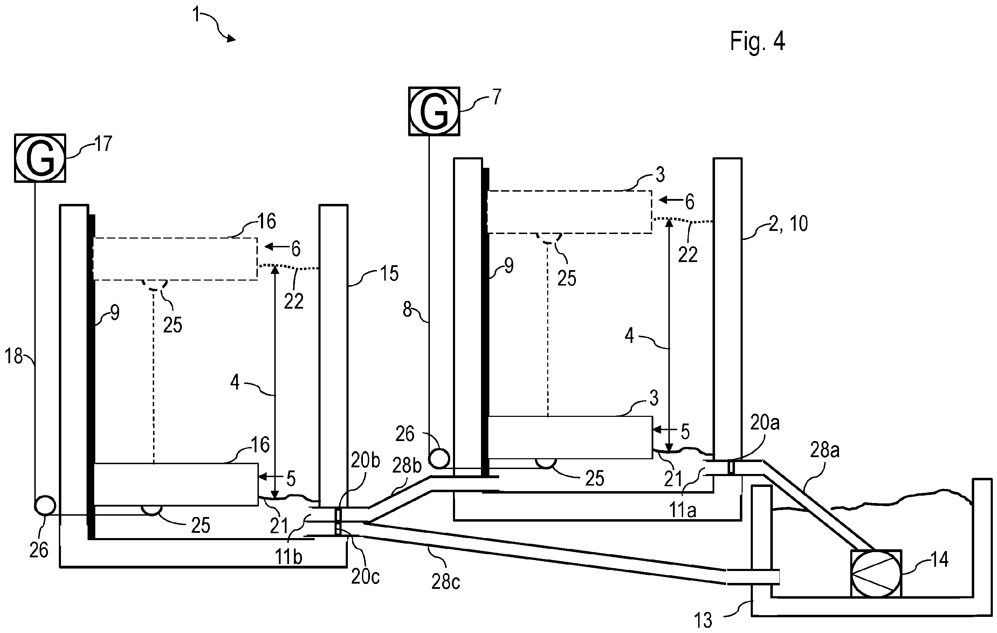

Figur 4 zeigt ein Ausführungsbeispiel einer erfindungsgemäßen hydromechanischen Energiespeicher- und Energieumwandlungsvorrichtung 1. Im Unterschied zur hydromechanischen Energiespeicher- und Energieumwandlungsvorrichtung 1 des dritten Ausführungsbeispiels (siehe Figur 3) ist zusätzlich ein zweites Behältnis 15 mit einer verschließbaren Öffnung 11b zur Zufuhr und Abfuhr von Wasser zu bzw. aus dem zweiten Behältnis 15 vorhanden. Das zweite Behältnis 15 ist baugleich zum ersten Behältnis 10 ausgebildet und verfügt folglich über einen in dem zweiten Behältnis 15 angeordneten zweiten Auftriebskörper 16, der mit steigendem Wasserstand in dem zweiten Behältnis 15 von einer unteren Position 5 in eine oberen Position 6 anhebbar und in der oberen Position 6 fixierbar ist, einen zweiten Generator 17 zur Umwandlung von kinetischer Energie in elektrische Energie und eine den zweiten Auftriebskörper 16 mit dem zweiten Generator 17 verbindende zweite Energieübertragungseinrichtung 18, ausgebildet zur Übertragung von kinetischer Energie zwischen dem zweiten Auftriebskörper 16 und dem zweiten Generator 17.

Das zweite Behältnis 15 ist mit dem ersten Behältnis 10 wasserleitend mittels der Rohrleitung 28b verbunden, welche mittels einer Verschlusseinrichtung 20b verschlossen werden kann. Die Verschlusseinrichtung 20b kann ebenso wie die Verschlusseinrichtung 20, 20a als Verschlussklappe ausgebildet sein. Das zweite Behältnis 15 ist außerdem auch mit dem Wasservorratsbehälter 13 über eine weitere Rohrleitung 28c, die mittels der Verschlusseinrichtung 20c verschließbar ist, wasserleitend verbunden.

Im Ausführungsbeispiel ist das zweite Behältnis 15 unterhalb des ersten Behältnisses 10 angeordnet, so dass das zweite Behältnis 15 automatisch mit Wasser aus dem ersten Behältnis 10 befüllt wird, falls die Öffnung 11b geöffnet ist. Diese Konfiguration ermöglicht eine besonders gleichmäßige Erzeugung von elektrischem Strom, da die beiden Auftriebskörper 3, 16 zeitlich versetzt bewegt und folglich auch der erste Generator 7 und der zweite Generator 17 zeitlich versetzt zur Generierung von elektrischer Energie genutzt werden können. Stillstandsphasen der Generierung von elektrischem Strom können dadurch vermieden werden.

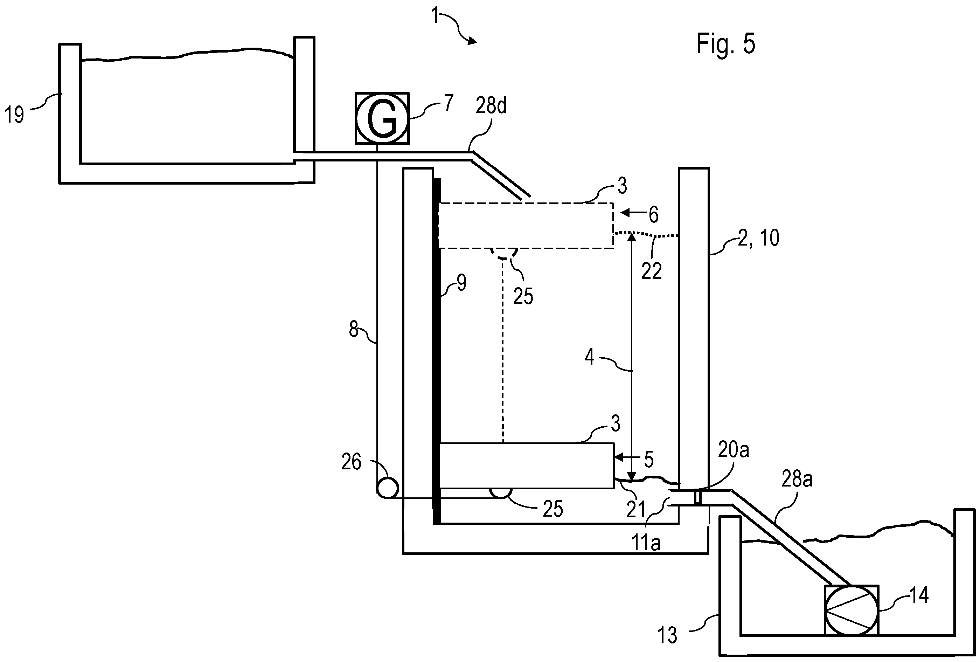

Figur 5 zeigt ein weiteres, nicht zur Erfindung gehörendes Beispiel einer hydromechanische Energiespeicher- und Energieumwandlungsvorrichtung 1. Im Unterschied zur hydromechanischen Energiespeicher- und Energieumwandlungsvorrichtung 1 des Beispiels gemäß Figur 3 ist zusätzlich ein oberhalb des ersten Behältnisses angeordneter Wasserbehälter 19 vorhanden, der wasserleitend mit dem ersten Auftriebskörper 3 mittels der Rohrleitung 28d verbindbar ist. Dadurch kann der erste Auftriebskörper 3, der, wie sich aus vorstehender Beschreibung ergibt, als hohler Betonkörper ausgebildet ist, mit Wasser aus dem Wasserbehälter 19 befüllt werden, wenn sich das erste Behältnis 3 in der oberen Position 6 befindet.

Die Befüllung mit Wasser bewirkt eine Erhöhung der Masse des ersten Auftriebskörper 3 und somit seiner potentiellen Energie. Folglich kann beim Absenken des ersten Auftriebskörpers von der oberen Position 6 in die untere Position 5 mehr kinetische Energie an den ersten Generator 7 übertragen werden. Ist der erste Auftriebskörper 3 wieder in der unteren Position 5 angelangt, so kann das Wasser aus dem ersten Auftriebskörper 3 in das erste Behältnis 10 abgegeben werden. Hierfür können Öffnungen im ersten Auftriebskörper 3 (nicht dargestellt) genutzt werden.

Der Wasserbehälter 19 kann mittels einer weiteren Pumpeinrichtung aus einem weiteren Wasserbehälter (nicht dargestellt) befüllt werden, wofür bevorzugt überschüssige elektrische Energie im elektrischen Stromnetz verwendet werden kann. Alternativ oder zusätzlich kann der Wasserbehälter 19 auch durch einen natürlichen Wasserzufluss, z. B. einen Bachlauf, befüllt werden.

In entsprechender Weise kann auch dem zweiten Auftriebskörper 16 ein weiterer Wasserbehälter zugeordnet sein oder es können sowohl der erste Auftriebskörper 3 als auch der zweite Auftriebskörper 16 aus demselben Wasserbehälter 19 befüllt werden.

Selbstverständlich kann ein Wasserbehälter 19 in analoger Weise auch in Kombination mit einem ersten Behältnis 10 verwendet werden, dessen Öffnung 11 mit einem natürlichen Wasservorkommen 12 in wasserleitender Verbindung steht, z. B. ein als Schiffsrumpf ausgebildetes erstes Behältnis 10, welches im Meer schwimmt.

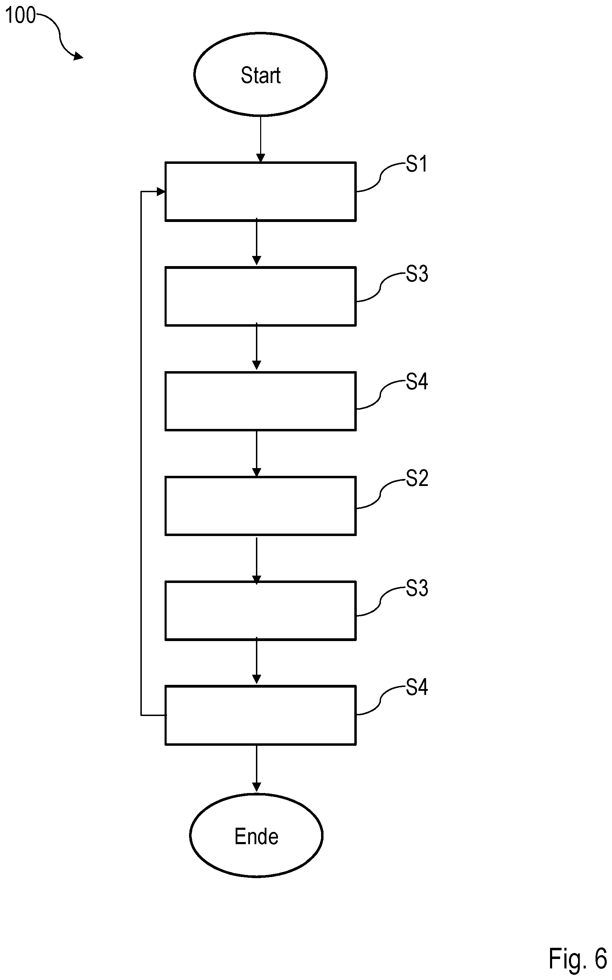

Figur 6 zeigt ein beispielhaftes Betriebsverfahren 100 für eine Energiespeicher- und Energieumwandlungsvorrichtung 1, beispielsweise eine der vorstehend unter Bezugnahme auf die Figuren 1 - 5 beschriebenen Energiespeicher- und Energieumwandlungsvorrichtungen 1.

Nach dem Start des Verfahrens 100 wird der erste Auftriebskörper 3 im Verfahrensschritt S1 von der unteren Position 5 in die obere Position 6 bewegt, indem der Wasserstand 4 in dem Wasserreservoir 2 entsprechend geändert, also erhöht, wird. Hierbei wird im Verfahrensschritt S3 kinetische Energie von dem ersten Auftriebskörper 3 zu dem ersten Generator 7 mittels der Energieübertragungseinrichtung 8 direkt übertragen. Die übertragene kinetische Energie wird im Verfahrensschritt S4 in elektrische Energie umgewandelt.

Anschließend wird im Verfahrensschritt S2 der erste Auftriebskörper 3 von der oberen Position 6 wieder in die untere Position 5 bewegt, in dem der Wasserstand 4 in dem Wasserreservoir 2 entsprechend geändert, also verringert, wird. Hierbei wird im Verfahrensschritt S3 kinetische Energie von dem ersten Auftriebskörper 3 zu dem ersten Generator 7 mittels der Energieübertragungseinrichtung 8 direkt übertragen. Die übertragene kinetische Energie wird im Verfahrensschritt S4 in elektrische Energie umgewandelt.

Nach dem Verfahrensschritt S4 kann das Verfahren 100 mit dem Verfahrensschritt S1 fortgesetzt oder beendet werden.

### Bezugszeichenliste

- 1: hydromechanische Energiespeicher- und Energieumwandlungsvorrichtung
- 2: Wasserreservoir
- 3: erster Auftriebskörper
- 4: Wasserstand
- 5: untere Position
- 6: obere Position
- 7: erster Generator
- 8: erste Energieübertragungseinrichtung
- 9: Fixiereinrichtung
- 10: erstes Behältnis
- 11, 11a, 11b: Öffnung
- 12: natürliches Wasservorkommen
- 13: Wasservorratsbehälter
- 14: Pumpeinrichtung
- 15: zweites Behältnis
- 16: zweiter Auftriebskörper
- 17: zweiter Generator
- 18: zweite Energieübertragungseinrichtung
- 19: Wasserbehälter
- 20, 20a, 20b, 20c: Verschlusseinrichtung
- 21: unterer Wasserstand
- 22: oberer Wasserstand
- 23: Mauer
- 24: unterste Begrenzungsfläche
- 25: Seilrolle
- 26: Umlenkrolle
- 27: Wasserstand des natürlichen Wasservorkommens
- 28, 28a, 28b, 28c, 28d: Rohrleitung

- 100: Betriebsverfahren

- S1: Bewegen des ersten Auftriebskörpers von der unteren Position in die obere Position mittels Ändern des Wasserstands in dem Wasserreservoir
- S2: Bewegen des ersten Auftriebskörpers von der oberen Position in die untere Position mittels Ändern des Wasserstands in dem Wasserreservoir
- S3: Übertragen von kinetischer Energie von dem ersten Auftriebskörper zu dem ersten Generator
- S4: Umwandeln der übertragenen kinetischen Energie in elektrische Energie.

## Patentansprüche

1. Hydromechanische Energiespeicher- und Energieumwandlungsvorrichtung (1), aufweisend:
- ein Wasserreservoir (2), wobei das Wasserreservoir (2) als ein erstes Behältnis (10) mit einer verschließbaren Öffnung (11, 11a) zur Zufuhr und Abfuhr von Wasser zu bzw. aus dem ersten Behältnis (10) ausgebildet ist,
- einen in dem Wasserreservoir (2) angeordneten ersten Auftriebskörper (3), der mit steigendem Wasserstand (4) in dem Wasserreservoir (2) von einer unteren Position (5) in eine obere Position (6) anhebbar und in der oberen Position (6) fixierbar ist,
- einen ersten Generator (7) zur Umwandlung von kinetischer Energie in elektrische Energie,
- eine den ersten Auftriebskörper (3) mit dem ersten Generator (7) verbindende erste Energieübertragungseinrichtung (8), ausgebildet zur Übertragung von kinetischer Energie zwischen dem ersten Auftriebskörper (3) und dem ersten Generator (7),
- eine Fixiereinrichtung (9), ausgebildet zur Fixierung des ersten Auftriebskörpers (3) in der oberen Position (6),
- ein zweites Behältnis (15) mit einer verschließbaren Öffnung (11b) zur Zufuhr und Abfuhr von Wasser zu bzw. aus dem zweiten Behältnis (15),
- einen in dem zweiten Behältnis (15) angeordneten zweiten Auftriebskörper (16), der mit steigendem Wasserstand in dem zweiten Behältnis (15) von einer unteren Position (5) in eine oberen Position (6) anhebbar und in der oberen Position (6) fixierbar ist,
- einen zweiten Generator (17) zur Umwandlung von kinetischer Energie in elektrische Energie,
- eine den zweiten Auftriebskörper (16) mit dem zweiten Generator (17) verbindende zweite Energieübertragungseinrichtung (18), ausgebildet zur Übertragung von kinetischer Energie zwischen dem zweiten Auftriebskörper (16) und dem zweiten Generator (17), und
- einen Wasservorratsbehälter (13),
wobei die verschließbare Öffnung (11, 11a) des ersten Behältnisses (10) mit dem Wasservorratsbehälter (13) in wasserleitender Verbindung steht und
wobei das zweite Behältnis (15) mit dem ersten Behältnis (10) und dem Wasservorratsbehälter (13) wasserleitend verbunden ist.

2. Energiespeicher- und Energieumwandlungsvorrichtung (1) nach Anspruch 1, wobei das Wasserreservoir (2) ein natürliches Wasservorkommen (12) ist.

3. Energiespeicher- und Energieumwandlungsvorrichtung (1) nach Anspruch 1, wobei das Wasserreservoir (2) als ein erstes Behältnis (10) mit einer verschließbaren Öffnung (11, 11a) zur Zufuhr und Abfuhr von Wasser zu bzw. aus dem ersten Behältnis (10) ausgebildet ist.

4. Energiespeicher- und Energieumwandlungsvorrichtung (1) nach Anspruch 3, wobei die verschließbare Öffnung (11, 11a) des ersten Behältnisses (10) mit einem natürlichen Wasservorkommen (12) in wasserleitender Verbindung steht.

5. Energiespeicher- und Energieumwandlungsvorrichtung (1) nach Anspruch 3 oder 4, aufweisend:
- einen Wasservorratsbehälter (13),
wobei die verschließbare Öffnung (11, 11a) des ersten Behältnisses mit dem Wasservorratsbehälter (13) in wasserleitender Verbindung steht.

6. Energiespeicher- und Energieumwandlungsvorrichtung (1) nach einem der Ansprüche 1, 4 oder 5, aufweisend:
- eine Pumpeinrichtung (14) zur Zufuhr von Wasser aus dem natürlichen Wasservorkommen (12) und/oder aus dem Wasservorratsbehälter (13) zum Wasserreservoir (2).

7. Energiespeicher- und Energieumwandlungsvorrichtung (1) nach Anspruch 1, wobei das zweite Behältnis (15) unterhalb des ersten Behältnisses (10) angeordnet ist.

8. Energiespeicher- und Energieumwandlungsvorrichtung (1) nach einem der Ansprüche 1, 6 oder 7, rückbezogen auf zumindest Anspruch 1, wobei der erste und/oder der zweite Auftriebskörper (3, 16) als mit Wasser befüllbare Hohlkörper ausgebildet sind.

9. Energiespeicher- und Energieumwandlungsvorrichtung (1) nach einem der Ansprüche 1 bis 8, aufweisend:
- einen oberhalb des ersten und/oder zweiten Behältnisses (10, 15) angeordneten Wasserbehälter (19),
wobei der Wasserbehälter (19) wasserleitend mit dem ersten und/oder dem zweiten Auftriebskörper (3, 16) verbindbar ist.

10. Energiespeicher- und Energieumwandlungsvorrichtung (1) nach einem der vorstehenden Ansprüche, wobei die erste Energieübertragungseinrichtung (8) zur direkten Übertragung von kinetischer Energie zwischen dem ersten Auftriebskörper (3) und dem ersten Generator (7) und/oder die zweite Energieübertragungseinrichtung (18) zur direkten Übertragung von kinetischer Energie zwischen dem zweiten Auftriebskörper (16) und dem zweiten Generator (17) ausgebildet ist.

11. Betriebsverfahren (100) für eine Energiespeicher- und Energieumwandlungsvorrichtung (1) nach einem der vorstehenden Ansprüche, das Verfahren aufweisend:
- S1, S2: Bewegen des ersten Auftriebskörpers (3) von der unteren Position (5) in die obere Position (6) und von der oberen Position (6) in die untere Position (5) mittels Ändern des Wasserstands (4) in dem Wasserreservoir (2),
- S3: Übertragen von kinetischer Energie von dem ersten Auftriebskörper (3) zu dem ersten Generator (7) während des Bewegens des ersten Auftriebskörpers (3) von der unteren Position (5) in die obere Position (6) und von der oberen Position (6) in die untere Position (5), und
- S4: Umwandeln der übertragenen kinetischen Energie in elektrische Energie.

## Claims

1. Hydromechanical energy storage and energy conversion device (1), comprising:
- a water reservoir (2), wherein the water reservoir (2) is configured in the form of a first container (10) having a closable opening (11, 11a) for the admission and discharge of water to and from the first container (10),
- a first float (3) which is arranged in the water reservoir (2) and can be lifted with the rising water level (4) in the water reservoir (2) from a lower position (5) into an upper position (6) and can be fixed in the upper position (6),
- a first generator (7) for converting kinetic energy into electrical energy,
- a first energy transmission apparatus (8) which connects the first float (3) to the first generator (7) and is designed to transmit kinetic energy between the first float (3) and the first generator (7),
- a securing device (9) which is designed to secure the first float (3) in the upper position (6),
- a second container (15) having a closable opening (11b) for admission and discharge of water to and from the second container (15),
- a second float (16) which is arranged in the second container (15) and can be lifted with the rising water level in the second container (15) from a lower position (5) into an upper position (6) and can be fixed in the upper position (6),
- a second generator (17) for converting kinetic energy into electrical energy,
- a second energy transmission apparatus (18) which connects the second float (16) to the second generator (17) and is designed to transmit kinetic energy between the second float (16) and the second generator (17), and
- a water storage container (13),
wherein the closable opening (11, 11a) of the first container (10) is connected to the water storage container (13) in a water-conducting manner and
wherein the second container (15) is connected to the first container (10) and the water storage container (13) in a water-conducting manner.

2. Energy storage and energy conversion device (1) according to Claim 1, wherein the water reservoir (2) is a natural body of water (12).

3. Energy storage and energy conversion device (1) according to Claim 1, wherein the water reservoir (2) is configured in the form of a first container (10) having a closable opening (11, 11a) for the admission and discharge of water to and from the first container (10).

4. Energy storage and energy conversion device (1) according to Claim 3, wherein the closable opening (11, 11a) of the first container (10) is connected to a natural body of water (12) in a water-conducting manner.

5. Energy storage and energy conversion device (1) according to Claim 3 or 4, comprising:
- a water storage container (13),
wherein the closable opening (11, 11a) of the first container is connected to the water storage container (13) in a water-conducting manner.

6. Energy storage and energy conversion device (1) according to any one of Claims 1, 4 or 5, comprising:
- a pump apparatus (14) for the admission of water from the natural body of water (12) and/or from the water storage container (13) to the water reservoir (2).

7. Energy storage and energy conversion device (1) according to Claim 1, wherein the second container (15) is arranged below the first container (10).

8. Energy storage and energy conversion device (1) according to any one of Claims 1, 6 or 7, referred back to at least Claim 1, wherein the first and/or the second floats (3, 16) are configured in the form of waterfillable hollow bodies.

9. Energy storage and energy conversion device (1) according to any one of Claims 1 to 8, comprising:
- a water container (19) which is arranged above the first and/or second container (10, 15),
wherein the water container (19) can be connected to the first and/or second floats (3, 16) in a water-conducting manner.

10. Energy storage and energy conversion device (1) according to any one of the preceding claims, wherein the first energy transmission apparatus (8) is configured for the direct transmission of kinetic energy between the first float (3) and the first generator (7) and/or the second energy transmission apparatus (18) is configured for the direct transmission of kinetic energy between the second float (16) and the second generator (17).

11. Operating method (100) for an energy storage and energy conversion device (1) according to any one of the preceding claims, the method comprising:
- S1, S2: movement of the first float (3) from the lower position (5) into the upper position (6), and from the upper position (6) into the lower position (5), by means of varying the water level (4) in the water reservoir (2),
- S3: transmitting kinetic energy from the first float (3) to the first generator (7) during the movement of the first float (3) from the lower position (5) into the upper position (6), and from the upper position (6) into the lower position (5), and
- S4: converting the transmitted kinetic energy into electrical energy.

## Revendications

1. Dispositif de stockage d'énergie et de conversion d'énergie hydromécanique (1), comprenant :
- un réservoir d'eau (2), le réservoir d'eau (2) étant conçu sous la forme d'un premier récipient (10) ayant une ouverture pouvant être fermée (11, 11a) pour l'alimentation et l'évacuation d'eau vers ou depuis le premier récipient (10),
- un premier flotteur (3), disposé dans le réservoir d'eau (2), qui peut être soulevé avec le niveau d'eau montant (4) dans le réservoir d'eau (2) d'une position inférieure (5) à une position supérieure (6) et peut être fixé dans la position supérieure (6),
- un premier générateur (7) pour convertir l'énergie cinétique en énergie électrique,
- un premier dispositif de transmission d'énergie (8) reliant le premier flotteur (3) au premier générateur (7), conçu pour la transmettre de l'énergie cinétique entre le premier flotteur (3) et le premier générateur (7),
- un dispositif de fixation (9), conçu pour fixer le premier flotteur (3) dans la position supérieure (6),
- un deuxième récipient (15) ayant une ouverture pouvant être fermée (11b) pour l'alimentation et l'évacuation d'eau vers ou depuis le deuxième récipient (15),
- un deuxième flotteur (16), disposé dans le deuxième récipient (15), qui peut être soulevé avec le niveau d'eau montant dans le deuxième récipient (15) d'une position inférieure (5) à une position supérieure (6) et peut être fixé dans la position supérieure (6),
- un deuxième générateur (17) pour convertir l'énergie cinétique en énergie électrique,
- un deuxième dispositif de transmission d'énergie (18) reliant le deuxième flotteur (16) au deuxième générateur (17), conçu pour transmettre de l'énergie cinétique entre le deuxième flotteur (16) et le deuxième générateur (17), et
- un réservoir de stockage d'eau (13),
l'ouverture pouvant être fermée (11, 11a) du premier récipient (10) étant en communication d'acheminement d'eau avec le réservoir de stockage d'eau (13), et
le deuxième récipient (15) étant relié de manière à acheminer de l'eau au premier récipient (10) et au réservoir de stockage d'eau (13).

2. Dispositif de stockage d'énergie et de conversion d'énergie (1) selon la revendication 1, dans lequel le réservoir d'eau (2) est une ressource d'eau naturelle (12).

3. Dispositif de stockage d'énergie et de conversion d'énergie (1) selon la revendication 1, dans lequel le réservoir d'eau (2) est conçu sous la forme d'un premier récipient (10) ayant une ouverture pouvant être fermée (11, 11a) pour l'alimentation et l'évacuation d'eau vers ou depuis le premier récipient (10).

4. Dispositif de stockage d'énergie et de conversion d'énergie (1) selon la revendication 3, dans lequel l'ouverture pouvant être fermée (11, 11a) du premier récipient (10) est en communication d'acheminement d'eau avec une ressource d'eau naturelle (12).

5. Dispositif de stockage d'énergie et de conversion d'énergie (1) selon la revendication 3 ou 4, comprenant :
- un réservoir de stockage d'eau (13),
l'ouverture pouvant être fermée (11, 11a) du premier récipient étant en communication d'acheminement d'eau avec le réservoir de stockage d'eau (13).

6. Dispositif de stockage d'énergie et de conversion d'énergie (1) selon l'une des revendications 1, 4 ou 5, comprenant :
- un dispositif de pompage (14) pour l'acheminement d'eau depuis la ressource d'eau naturelle (12) et/ou depuis le réservoir de stockage d'eau (13) vers le réservoir d'eau (2).

7. Dispositif de stockage d'énergie et de conversion d'énergie (1) selon la revendication 1, dans lequel le deuxième récipient (15) est agencé en dessous du premier récipient (10).

8. Dispositif de stockage d'énergie et de conversion d'énergie (1) selon l'une des revendications 1, 6 ou 7, dépendant au moins de la revendication 1, dans lequel le premier et/ou le deuxième flotteur (3, 16) sont conçus sous forme de corps creux pouvant être remplis d'eau.

9. Dispositif de stockage d'énergie et de conversion d'énergie (1) selon l'une des revendications 1 à 8, comprenant :
- un réservoir d'eau (19) agencé au-dessus du premier et/ou du deuxième récipient (10, 15),
le réservoir d'eau (19) pouvant être relié de manière à acheminer de l'eau au premier et/ou au deuxième flotteur (3, 16).

10. Dispositif de stockage d'énergie et de conversion d'énergie (1) selon l'une des revendications précédentes, dans lequel le premier dispositif de transmission d'énergie (8) est conçu pour transmettre directement de l'énergie cinétique entre le premier flotteur (3) et le premier générateur (7) et/ou le deuxième dispositif de transmission d'énergie (18) est conçu pour transmettre directement de l'énergie cinétique entre le deuxième flotteur (16) et le deuxième générateur (17).

11. Procédé de fonctionnement (100) pour un dispositif de stockage d'énergie et de conversion d'énergie (1) selon l'une des revendications précédentes, le procédé comprenant :
- S1, S2 : le déplacement du premier flotteur (3) de la position inférieure (5) à la position supérieure (6) et de la position supérieure (6) à la position inférieure (5) au moyen d'une variation du niveau d'eau (4) dans le réservoir d'eau (2),
- S3 : la transmission d'énergie cinétique du premier flotteur (3) au premier générateur (7) pendant le déplacement du premier flotteur (3) de la position inférieure (5) à la position supérieure (6) et de la position supérieure (6) à la position inférieure (5), et
- S4: la conversion de l'énergie cinétique transmise en énergie électrique.
